# EUROPÄISCHE PATENTSCHRIFT

(11) **EP 4 495 532 B1**
(45) Veröffentlichungstag und Bekanntmachung des Hinweises auf die Patenterteilung: **11.02.2026**
(21) Anmeldenummer: 24189187.8
(22) Anmeldetag: 17.07.2024
(51) Int. Cl.: F28F 25/08

(54) **GEWELLTE GITTERMATTE**
CORRUGATED MESH MAT
TREILLIS ONDULÉ

(30) Priorität: 19.07.2023 DE 102023119121
(43) Veröffentlichungstag der Anmeldung: 22.01.2025
(73) Patentinhaber: Hewitech GmbH & Co. KG, 48607 Ochtrup (DE)
(72) Erfinder: Dirkskötter, Frank, 48607 Ochtrup (DE)
(74) Vertreter: dompatent

(56) Entgegenhaltungen:
- EP-A1- 2 881 170
- EP-A2- 0 825 407
- DE-A1- 102005 051 882
- DE-U- 6 751 260
- US-A1- 2021 389 064

## Beschreibung

Die Erfindung betrifft eine gewellte Gittermatte aus Kunststoffmaterial, insbesondere thermoplastischem Kunststoffmaterial, eines einen Stapel aus mehreren derartigen Gittermatten aufweisenden Einbauelements einer Vorrichtung zur Behandlung eines Nutzfluids mittels eines Arbeitsfluids, insbesondere zur Befeuchtung und/oder Reinigung und/oder Kühlung eines Nutzfluids, insbesondere eines Gases, mittels eines Arbeitsfluids, insbesondere versprühten Wassers.

Vorrichtungen zur Behandlung von Gasen, insbesondere zur Befeuchtung, Reinigung und/oder Kühlung von Gasen wie bspw. Luft sind grundsätzlich bekannt. Derartige Vorrichtungen können bspw. als Verdunstungsbefeuchter oder Stoffaustauscher dienen, die unter anderem zur Luftbefeuchtigung und gleichzeitigen Luftkühlung bspw. in Wohn- oder Bürogebäuden, Lagerhallen, Stallungen, Gewächshäusern und anderen Räumen oder auch von technischen Anlagen, bspw. für die Reinigung und insbesondere Entstaubung von Zu- oder Abluft für reaktive Gas- oder Luftreinigungen (insbesondere Entfernung von Geruchsstoffen wie bspw. Ammoniak aus der Stallabluft) eingesetzt werden. Die Abkühlung eines Gases mit Hilfe derartiger Vorrichtungen erfolgt nach dem Prinzip der adiabatischen Kühlung (Verdunstungskühlung). Behandlungsvorrichtungen dienen aber insbesondere auch als Wärmetauscher bspw. zum Einbau in bzw. an Kühltürmen und sind in der Ausgestaltung von Rieselkühlern grundsätzlich bekannt.

Die bekannten Behandlungsvorrichtungen der vorstehend genannten Arten weisen Einbaueinrichtungen in Form von Einbaupaketen auf, die jeweils eine Vielzahl von Gittermatten aufweisen, welche zumeist gewellt sind, so dass bei dichter Anlage benachbarter Gittermatten sich kreuzende oder seitlich versetzte Kanäle entstehen, durch die das Gas über eine Eingangsseite der Vorrichtung einströmt, die Vorrichtung durchströmt und an einer gegenüberliegenden Ausgangsseite wieder herausströmt. Beispiele für derartige Gittermatten sowie aus diesen gebildete Einbaupakete sind in WO-A-2009/153278, WO-A-2015/044274, EP-A-0 825 407 und DE-U-67 51 260 beschrieben.

**Eine** gewellte Gittermatte gemäß dem Oberbegriff von Anspruch 1 wird in US-2021/389064 offenbart. Die Eingangs- und Ausgangsseiten der Vorrichtung bzw. Einbaupakete werden durch gegenüberliegende Ränder einzelner nebeneinanderliegender Gittermatten der eingangs- bzw. ausgangsseitig der Vorrichtung angeordneten Einbaupakete gebildet. Somit strömt also das zu behandelnde Fluid parallel zur Erstreckung der Gittermatten zwischen deren betreffenden Ränder und zwischen den Gittermatten hindurch. Grundsätzlich ist es aber auch möglich, dass das zu behandelnde Fluid quer zur Erstreckung der Gittermatten strömt.

Die Einbaupakete der vorstehend genannten Typen von Nutzfluid-Behandlungsvorrichtungen werden mit Flüssigkeit, dem sogenannten Arbeitsfluid, bei dem es sich insbesondere um Wasser handelt, benetzt, so dass das zu behandelnde Nutzfluid an benetzten Flächen der Gittermatten entlang strömt. Dabei ist es wünschenswert, dass die Benetzungsflüssigkeit eine möglichst große Oberfläche bildet und sich über einen längeren Zeitraum in der Vorrichtung bzw. den Einbaupaketen hält.

Im Regelfall sind die Gittermatten rechteckförmig, wobei mehrere benachbarte Gittermatten ein blockförmiges (quaderförmiges) Einbaupaket bilden. Es ist aber auch möglich, dass die Einbaupakete andere geometrische Formen aufweisen. So könnte man beispielsweise durch den Einsatz unterschiedlich großer, jeweils rechteckiger Gittermatten ein Einbaupaket erhalten, das zylindrisch ist. Längs eines Durchmessers des Querschnitts des Zylinders sind dann die breitesten Gittermatten angeordnet, wobei die jeweils benachbarten Gittermatten in ihrer Breite abnehmen.

Die bekannten Nutzfluid-Behandlungsvorrichtungen können nach dem Gegenstrom oder nach dem Kreuzstromprinzip arbeiten. Beim Gegenstromprinzip strömen das zu behandelnde Fluid und das zur Behandlung dieses Fluids eingesetzte Arbeitsfluid (bspw. Kühlmedium) entgegengesetzt zueinander. Bei Behandlungsvorrichtungen, die nach dem Kreuzstromprinzip arbeiten, kreuzen sich die Strömungsrichtungen des zu behandelnden Fluids und für des Arbeitsfluids, und zwar im Regelfall unter einem im Wesentlichen rechten Winkel.

Wie bereits oben beschrieben, bestehen die Gittermatten der Einbauelemente aus Kunststoff, insbesondere aus thermoplastischem Kunststoff, und werden im Spritzgussverfahren hergestellt. Vorteilhaft für die Effizienz und Effektivität der Behandlung des Nutzfluids durch das Arbeitsfluid ist es, wenn sich durch die Gitterkonstruktion der einzelnen Gittermatten bildende Kanäle benachbarter Gittermatten kreuzen. Dies wird vorteilhafterweise dadurch erreicht, dass die gewellte Gittermatte geradlinige Erhebungen und Vertiefungen, also sozusagen "Berge" und "Täler" aufweist, die durch gitterförmig verlaufende Gitterstreben verbunden sind und die in einem Winkel von ungleich 90°, also schräg, zu den Längs- und Querrändern der Gittermatte verlaufen. Hierdurch allerdings kommt es zu einer nicht symmetrisch aufgebauten Gittermatte. Kühlt das in die Spritzgussform eingebrachte heiße Kunststoffmaterial nach dem Öffnen der Spritzgussform ab, so kommt es auf Grund in Längs- und Querrichtung unterschiedlich stark wirkender Schrumpfungen zu einem Verzug der Gittermatten, weshalb diese nicht mehr rechteckig sondern parallelogrammartig ist.

Diesem Phänomen kann man entgegenwirken, indem z.B. durch Unterbrechung einiger der Kunststoff-Gitterstreben der Gittermatte in diese Unregelmäßigkeiten eingebracht werden. Dieses Konzept wird in EP-A-2 881 170 und DE-A-10 2005 051 882 verfolgt.

Sofern allerdings die Unterbrechungen einiger der Gitterstreben in nicht für die mechanische Stabilität des Einbauelements optimaler Weise über die Gittermatte verteilt werden, kann es wiederum zu Problemen kommen.

Aufgabe der Erfindung ist es, gewellte Gittermatten eines einen Stapel aus mehreren derartigen Gittermatten aufweisenden Einbauelements zu schaffen, die im als Stapel zusammengesetzten Zustand dem Einbauelement ausreichende Stabilität verleihen.

Zur Lösung dieser Aufgabe wird mit der Erfindung eine gewellte Gittermatte eines einen Stapel aus mehreren derartigen Gittermatten aufweisenden Einbauelements einer Vorrichtung zur Behandlung eines Nutzfluids mittels eines Arbeitsfluids, insbesondere zur Befeuchtung und/oder Reinigung und/oder Kühlung eines Nutzfluids, insbesondere eines Gases, mittels eines Arbeitsfluids, insbesondere versprühten Wassers, vorgeschlagen, wobei die gewellte Gittermatte versehen mit
- einer Oberseite und einer Unterseite,
- einem ersten Längsrand und einem zweiten Längsrand, die im Wesentlichen zueinander parallel verlaufen und durch zwei zu diesen Längsrändern querverlaufende, ebenfalls im Wesentlichen zueinander parallele Querränder verbunden sind,
- in einem Winkel von ungleich 90° zu sowohl den Längsrändern als auch den Querrändern geradlinig verlaufenden, wechselweise nebeneinanderliegenden Vertiefungen und Erhebungen mit diese verbindenden Flanken,
- wobei die Erhebungen an der Oberseite und die Vertiefungen an der Unterseite angeordnet sind,
- wobei längs der Erhebungen an der Oberseite und längs der Vertiefungen an der Unterseite jeweils eine geradlinige erste Gitterstrebe verläuft,
- wobei die ersten Gitterstreben jeweils einer Erhebung und der zu dieser benachbarten Vertiefung durch sich kreuzende zweite und dritte Gitterstreben verbunden sind, die an den Flanken verlaufen und miteinander erste Kreuzungspunkte sowie mit den ersten Gitterstreben an der Oberseite und an der Unterseite jeweils zweite Kreuzungspunkte bilden,
- wobei jede bis zu dem ersten Längsrand verlaufende erste Gitterstrebe einen ersten Unterbrechungsabschnitt aufweist, dessen Mittenpunkt zu dem ersten Längsrand einen ersten Abstand aufweist,
- wobei jede bis zu dem zweiten Längsrand verlaufende erste Gitterstrebe einen zweiten Unterbrechungsabschnitt aufweist, der zu dem zweiten Längsrand einen zweiten Abstand aufweist,
- wobei der erste Abstand kleiner ist als der zweite Abstand,
- wobei die ersten Gitterstreben jeweils zweier benachbarter Erhebungen und/oder jeweils zweier benachbarter Vertiefungen beidseitig ihrer ersten und zweiten Unterbrechungsabschnitte jeweils durch miteinander Teilnetzwerke bildende, weitere Gitterstreben verbunden sind und
- wobei die längs jeweils einem der Längsränder nebeneinander angeordneten Teilnetzwerke untereinander durch eine längs zu dem jeweiligen Längsrand verlaufende vierte Gitterstreben miteinander verbunden sind, die sich durch den ersten bzw. zweiten Unterbrechungsabschnitt erstreckt und z.B. an dem Mittenpunkt des ersten bzw. zweiten Unterbrechungsabschnitts durch diesen erstreckt und die geradlinig oder zick-zack-förmig verlaufen können.

Nach der Erfindung weist die Gittermatte in bekannter Weise eine Oberseite und eine Unterseite auf. Die Gittermatte ist begrenzt durch einen ersten Längsrand und einen zweiten Längsrand sowie durch zwei Querränder, die die beiden Längsränder miteinander verbinden. Sowohl die Längsränder als auch die Querränder sind im Wesentlichen parallel zueinander ausgerichtet. In einem Winkel von ungleich 90° zu sowohl den Längsrändern als auch den Querrändern verlaufen geradlinige wechselweise nebeneinanderliegende Vertiefungen und Erhebungen mit diese verbindenden Flanken. Die gesamte Gittermatte weist Gitterstreben auf. Erste Gitterstreben verlaufen dabei längs der Erhebungen an der Oberseite der Gittermatte und längs der Vertiefungen an der Unterseite der Gittermatte. Benachbarte erste Gitterstreben, also die erste Gitterstrebe einer Erhebung und die erste Gitterstrebe der benachbarten Vertiefung sind durch sich kreuzende zweite und dritte Gitterstreben verbunden, die an den Flanken miteinander erste Kreuzungspunkte bilden sowie zusammen mit den besagten ersten Gitterstreben zweite Kreuzungspunkte bilden, die sich dementsprechend an der Oberseite und an der Unterseite der Gittermatte befinden.

Erfindungsgemäß ist ferner vorgesehen, dass jede in Richtung auf den ersten Längsrand zulaufende erste Gitterstrebe einen ersten Unterbrechungsabschnitt aufweist, der zu dem ersten Längsrand einen ersten Abstand aufweist. Die ersten Gitterstreben sind also in ihrem Verlauf zum ersten Längsrand hin unterbrochen. Genauso sind erfindungsgemäß die ersten Gitterstreben auch in ihrem Verlauf in Richtung auf den zweiten Längsrand unterbrochen. Die Besonderheit besteht nun darin, dass die beiden Unterbrechungsabschnitte unterschiedliche Abstände zu den jeweiligen Längsrändern aufweisen. Der erste Abstand ist dabei kleiner als der zweite Abstand. Zur Verbindung der ersten Gitterstreben mit den jeweiligen Längsrandabschnitten der Gittermatte ist vorgesehen, dass die ersten Gitterstreben jeweils zweier benachbarter Erhebungen und/oder jeweils zweier benachbarter Vertiefungen beidseitig ihrer ersten und zweiten Unterbrechungsabschnitte jeweils durch miteinander Teilnetzwerke bildende, weitere Gitterstreben verbunden sind, wobei diese Teilnetzwerke untereinander durch jeweils parallel zu den Längsrändern verlaufende geradlinige vierte Gitterstreben miteinander verbunden sind.

Durch die unterschiedlichen Abstände der ersten Unterbrechungsabschnitte zu dem ersten Längsrand und der zweiten Unterbrechungsabschnitte zu dem zweiten Längsrand wird für eine ausreichende Unregelmäßigkeit der Gitterstruktur der Gittermatte gesorgt, die dem Verzug der typischerweise rechteckigen Gittermatte beim Abkühlen entgegenwirkt und einen solchen Verzug weitestgehend verhindert. Werden nun zwei erfindungsgemäße Gittermatten aufeinandergelegt, indem sich ihre schrägverlaufenden Erhebungen und Vertiefungen kreuzen, entstehen einerseits sich kreuzende Kanäle und andererseits an den Längsrändern zueinander versetzte erste und zweite Unterbrechungsabschnitte, so dass verhindert wird, dass beim derartigen Zusammensetzen mehrerer Gittermatten zu einem Einbaupaket an den gegenüberliegenden Längsrändern des Einbaupakets, die durch die Längsränder der einzelnen Gittermatten definiert sind, keine miteinander fluchtenden ersten und zweiten Unterbrechungsabschnitte entstehen, sondern dass wechselweise erste und zweite Unterbrechungsabschnitte aufeinanderfolgen. Das wiederum steigert die Stabilität des Einbaupakets. Werden nun diese Einbaupakete in vertikaler Ausrichtung ihrer Gittermatten nebeneinander ausgelegt, um eine erste Lage derartiger Gittermatten beispielsweise in einem Kühlturm zu verlegen, so kann diese erste Lage von Gittermatten begangen werden, um auf ihr eine zweite Lage von Einbaupaketen anzuordnen. Die Einbaupakete sind ausreichend stabil, um dem Gewicht einer Person bei Begehung der Einbaupaketlage mechanisch zu widerstehen.

Die beiden vierten Gitterstreben, die parallel zu den beiden Längsrändern in unterschiedlichen Abständen zu diesen durchgehend verlaufen, sorgen ebenfalls für einen Ausgleich ungleicher, unsymmetrischer Verzüge der Gittermatte beim Abkühlen, so dass die Gittermatte im Wesentlichen rechteckig bleibt.

Den vierten Gitterstreben der Gittermatte entsprechen Kanäle der Spritzgussform (wie das auch für alle anderen Gitterstreben der Gittermatte gilt). Durch jeden der den vierten Gitterstreben entsprechenden Kanäle der Spritzgussform gelangt beim Einbringen des Kunststoffs in die Spritzgussform flüssiges Material recht schnell in die sich kreuzenden und/oder anderweitig miteinander verbundenen Kanäle für die Gitterstreben der Teilnetzwerke, was das "Befüllen" der Spritzgussform mit Material vereinfacht, verbessert sowie zeitlich verkürzt, was weitere mit der Erfindung verbundene Vorteile sind.

In vorteilhafter Ausgestaltung der Erfindung kann ferner vorgesehen sein, dass die ersten und zweiten Unterbrechungsabschnitte gleich breit sind. Alternativ ist demnach auch vorgesehen, dass die Unterbrechungsabschnitte unterschiedliche Längen aufweisen können. Die Bemessungen der Unterbrechungsabschnitte und ihre Abstände zu den jeweiligen Längsrändern können so gewählt werden, dass sich die Unterbrechungsabschnitte zweier in obiger Weise mit gekreuzten Erhebungen und Vertiefungen aneinanderliegender Gittermatten überlappen oder vollständig versetzt zueinander sind.

In zweckmäßiger Ausgestaltung der Erfindung ist ferner vorgesehen, dass die Teilnetzwerke jeweils einen in einer Höhe zwischen der Oberseite und der Unterseite liegenden Mittenabschnitt aufweisen und dass die vierten Gitterstreben ebenfalls in dieser Höhe verlaufen. Die Teilnetzwerke, die benachbarte Erhebungen bzw. benachbarte Vertiefungen innerhalb der Unterbrechungsabschnitte miteinander verbinden, liegen zweckmäßigerweise im Bereich zwischen der Oberseite und der Unterseite der Gittermatte und vorteilhafterweise auf "halber Höhe" zwischen Oberseite und Unterseite der Gittermatte.

In weiterer vorteilhafter Ausgestaltung der Erfindung ist es zweckmäßig, wenn die ersten Gitterstreben zwischen den zweiten Kreuzungspunkten mit den zweiten und dritten Gitterstreben jeweils seitlich abstehende, in Höhe jeweils der Oberseite und der Unterseite verlaufende stabförmige Vorsprünge aufweisen, wobei es ferner von Vorteil sein kann, wenn zu beiden Seiten einer ersten Gitterstrebe jeweils zwei miteinander V-förmig verlaufende stabförmige Vorsprünge angeordnet sind, wobei diese vier stabförmigen Vorsprünge ihrerseits X-förmig verlaufen. Diese Konstruktionen mit stabförmigen abstehenden Vorsprüngen haben den Vorteil, dass die Oberfläche der Gittermatte vergrößert ist, was wiederum dazu führt, dass dem Arbeitsfluid eine größere Oberfläche zur Verfügung steht, an der es sich "halten" kann, um seinerseits nun eine größere Oberfläche zu bilden, was wiederum vorteilhaft für die Interaktion mit dem Nutzfluid ist.

Ferner ist in vorteilhafter Ausgestaltung der Erfindung vorgesehen, dass mindestens zwei der Gitterstreben jedes Teilnetzwerks sich kreuzen und dass die vierte Gitterstrebe durch diesen Kreuzungspunkt verläuft.

Typischerweise ist ferner in vorteilhafter Ausgestaltung der Erfindung vorgesehen, dass die vierten Gitterstreben einige der Gitterstreben jedes Teilnetzwerks kreuzen.

Schließlich kann bei einer weiteren vorteilhaften Ausgestaltung der Erfindung vorgesehen sein, dass benachbarte Teilnetzwerke durch einige ihrer Gitterstreben mit den benachbarten ersten Gitterstreben und insbesondere mit den ersten Gitterstreben benachbarter Erhebungen oder benachbarter Vertiefungen verbunden sind.

Insgesamt ist zu sagen, dass sich in der Praxis Gittermatten gegenüber Folienelementen grundsätzlich bewährt haben, und zwar aufgrund des geringen Strömungswiderstandes eines Gittermatten-Einbaupakets gegenüber einem Folienmatten-Einbaupaket. Der geringe Strömungswiderstand wird sozusagen erkauft durch eine "luftigere" Ausgestaltung der einzelnen Matten, die als Gitterkonstruktion konzipiert sind. Das allerdings reduziert die Oberfläche, an der sich Arbeitsfluid "halten" kann. Durch Ausgestaltung von von den Gitterstreben, und zwar von sämtlichen Gitterstreben, abstehenden Vorsprüngen kann dem wiederum in gewisser Weise entgegengewirkt werden.

Wie bereits oben erwähnt, werden die erfindungsgemäßen Gittermatten wechselweise ineinandergelegt zu Einbaupaketen zusammengesetzt. Es ist grundsätzlich bekannt, zur Verbindung der so zu einem Einbaupaket zusammengesetzten Gittermatten Zapfen-Loch-Ausbildungen an der Ober- und der Unterseite einer Gittermatte vorzusehen. Eine vorteilhafte Ausgestaltung der Erfindung sieht in diesem Zusammenhang vor, die Gittermatte mit über die Oberseite und die Unterseite verteilten, zueinander komplementären Zapfenausbildungen und Lochausbildungen zur Verbindung von übereinander angeordneten Gittermatten des Gittermattenstapels eines Einbauelements bei sich kreuzenden Erhebungen und Vertiefungen benachbarter Gittermatten des Gittermattenstapels zu sehen, indem benachbarte Gittermatten des Gittermattenstapels wechselweise mit ihren Oberseiten und mit ihren Unterseiten aneinanderliegend angeordnet sind, wobei die ersten und die zweiten Unterbrechungsabschnitte einer Gittermatte bezogen auf ihre Längsränder seitlich versetzt zu den zweiten und ersten Unterbrechungsabschnitten der jeweils benachbarten Gittermatte angeordnet sind. Beispiele für mögliche Zapfen-Loch-Ausbildungen sind in EP 3 690 378 A1 und DE 197 33 480 A1 beschrieben.

Zweckmäßig ist es, wenn der Abstand des dem zweiten Längsrand zugewandten Endes des zweiten Unterbrechungsabschnitts von dem zweiten Längsrand um mehr als die Breite des ersten Unterbrechungsabschnitts größer ist als der Abstand des dem ersten Längsrand abgewandten Endes des ersten Unterbrechungsabschnitts vom ersten Längsrand, so dass sich beim Aufeinanderlegen zweier Gittermatten unter Anlage ihrer Oberseiten oder unter Anlage ihrer Unterseiten bis zum zweiten Längsrand verlaufende Abschnitte der Gitterstreben über die ersten Unterbrechungsabschnitte erstrecken.

In weiterer vorteilhafter Ausgestaltung der Erfindung kann vorgesehen sein, dass zwischen den zweiten Unterbrechungsabschnitten und dem zweiten Längsrand in Richtung orthogonal zum zweiten Längsrand zueinander beabstandete Zapfen- und/oder Lochausbildungen vorgesehen sind, die hinsichtlich ihres jeweiligen Abstandes mit Zapfen- und/oder Lochausbildungen korrespondieren, die beidseitig des ersten Unterbrechungsabschnitts angeordnet sind, so dass sich beim Aufeinanderlegen zweier Gittermatten unter Anlage ihrer Oberseiten oder unter Anlage ihrer Unterseiten bis zum zweiten Längsrand verlaufende Abschnitte der Gitterstreben über die ersten Unterbrechungsabschnitte erstrecken und die beiden Gittermatten durch die komplementären Zapfen- und/oder Lochausbildungen innerhalb der Abschnitte, in denen sich Gitterstreben über die ersten Unterbrechungsabschnitte und über die zweiten Unterbrechungsabschnitte erstrecken, mechanisch miteinander verbunden sind.

Die oben genannte Aufgabe wird erfindungsgemäß ferner gelöst durch ein Einbauelement einer Vorrichtung zur Behandlung eines Nutzfluids mittels eines Arbeitsfluids, insbesondere zur Befeuchtung und/oder Reinigung und/oder Kühlung eines Nutzfluids, insbesondere eines Gases, mittels eines Arbeitsfluids, insbesondere versprühten Wassers, wobei das Einbauelement versehen ist mit
- einem Stapel aus aneinanderliegenden gewellten Gittermatten nach der Erfindung und/oder nach einer der zuvor beschriebenen Ausgestaltungen der Erfindung,
- wobei benachbarte Gittermatten bei sich kreuzenden Erhebungen und Vertiefungen aneinanderliegen, indem jeweils benachbarte Gittermatten wechselweise mit ihren Oberseiten und ihren Unterseiten aneinanderliegend angeordnet sind, und die ersten und zweiten Unterbrechungsabschnitte einer Gittermatte seitlich versetzt zu den zweiten und ersten Unterbrechungsabschnitten der jeweils benachbarten Gittermatte angeordnet sind.

Die Erfindung wird nachfolgend anhand eines Ausführungsbeispiels sowie unter Bezugnahme auf die Zeichnung näher erläutert. Im Einzelnen zeigen dabei:
- Fig. 1: eine schematische Darstellung eines Einbauelements, das aus einer Vielzahl von schräg gewellten Gittermatten mit sich wechselweise kreuzenden Wellungen (Erhebungen und Vertiefungen) zusammengesetzt ist, wobei das Einbauelement in seiner Einbausituation mit vertikal ausgerichteten Gittermatten dargestellt ist, ohne allerdings in dieser Darstellung die Gitterstruktur der Gittermatten zu zeigen,
- Fig. 2: eine Draufsicht auf eine Gittermatte mit im Bereich ihrer Längsränder unterbrochenen ersten Gitterstreben an der Ober- und an der Unter- seite, wobei die Unterbrechungsabschnitte unterschiedliche Abstände zu den Längsrändern aufweisen,
- Fig. 3: eine vergrößerte Darstellung der Gittermatte in Draufsicht, in der lediglich die beiden gegenüberliegenden Querrand-Endbereiche gezeigt sind,
- Fig. 4: eine perspektivische Ansicht des in Fign. 2 und 3 bei IV gezeigten Bereichs,
- Fig. 5: eine perspektivische Ansicht des in den Fign. 2 und 3 bei V gezeigten Bereichs,
- Fig. 6: schematisch angedeutet, wie zwei benachbarte Gittermatten aufeinandergelegt werden, damit sich sich kreuzende Strömungshalbkanäle bilden und die Gittermatten innerhalb ihrer Unterbrechungsabschnitte stabilisiert werden, und
- Fig. 7: eine abschnittsweise vergrößerte Darstellung der Gittermatte mit Verdeutlichung der Anordnung von zu den Längsrändern der Gittermatte parallel verlaufenden Reihen mit Zapfen und Löchern, wobei zu jedem Längsrand hin drei derartige Reihen in bestimmten Abständen zueinander angeordnet sind.

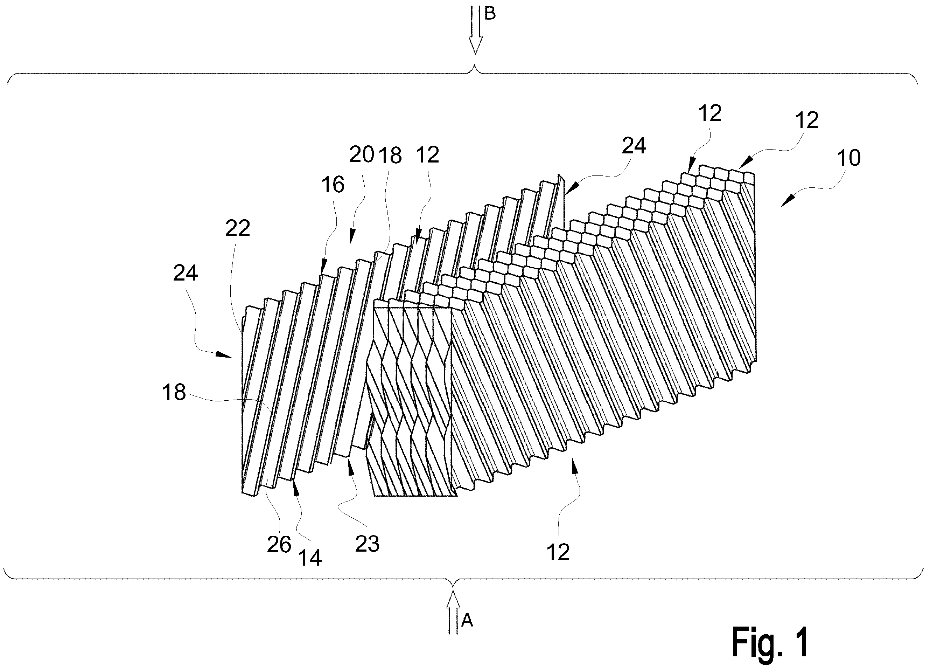

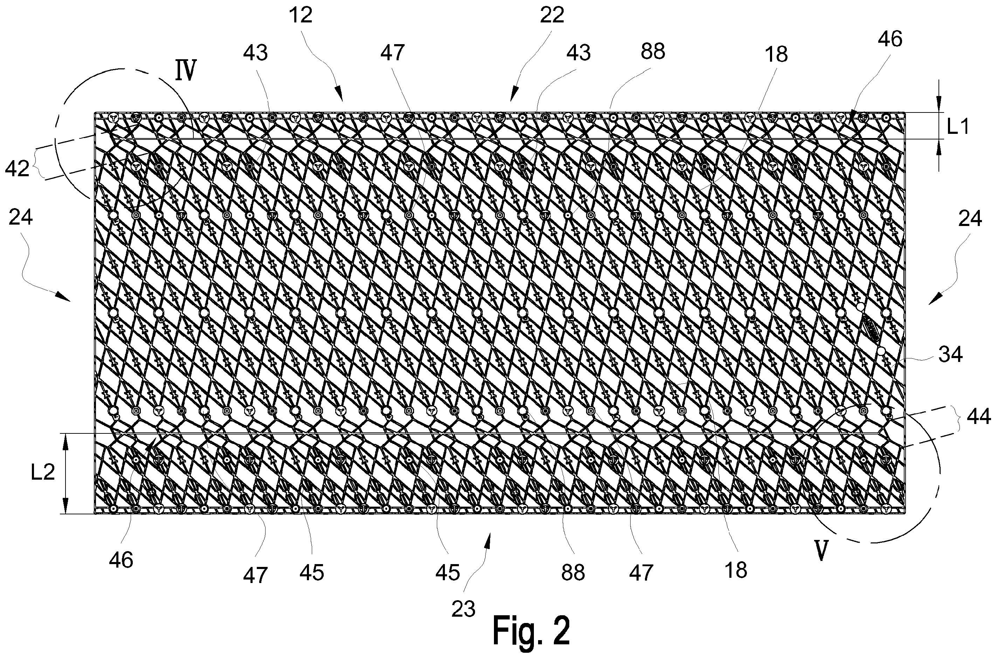

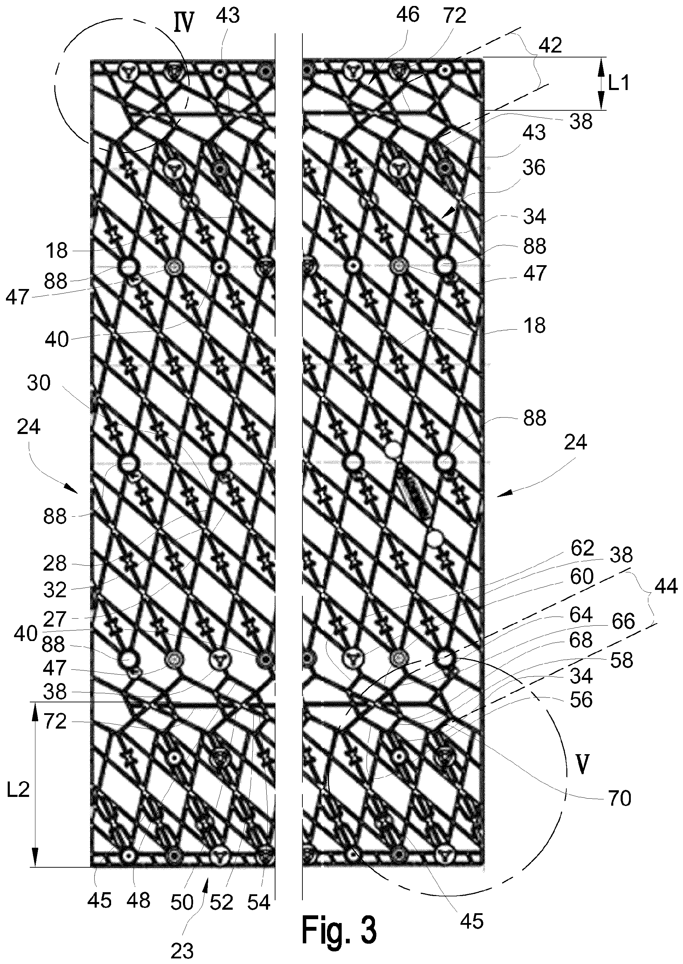

In Fig. 1 ist schematisch und in Explosionsdarstellung ein Einbauelement 10 in Form eines Blocks aus mehreren schräg gewellten Gittermatten 12 (die Gitterstruktur ist in den Fign. 2 bis 5 darstellt) gezeigt, wobei jede Gittermatte so, wie beispielhaft in den Fign. 2 bzw. 3 in Draufsicht gezeigt, ausgestaltet ist. Jede Gittermatte 12 weist eine schräg verlaufende Wellung aus Erhebungen 14 bzw. Wellenbergen und Vertiefungen 16 bzw. Wellentälern auf, längs derer sich erste Gitterstreben 18 (siehe auch die Fign. 2 bis 5) erstrecken. Benachbarte Erhebungen 14 und Vertiefungen 16 sind dabei durch Flanken 20 miteinander verbunden, wobei das Einbauelement 10 z.B. gemäß dem Gegenstromprinzip eingesetzt wird, indem das zu behandelnde Fluid (z.B. zu kühlender aufsteigender Wasserdampf) in Richtung des Pfeils A (z.B. von unten nach oben) durch das Einbauelement 10 und das Arbeitsfluid (z.B. versprühtes Kühlwasser) in Gegenrichtung (siehe Pfeil B und demzufolge in diesem Fall von oben nach unten) an den Gitterstrukturen der Gittermatten des Einbauelements abfließt. Die Gittermatte 12 weist ferner zwei im Wesentlichen parallele, gewellte Längsränder, nämlich einen ersten Längsrand 22 und einen zweiten Längsrand 23, sowie zwei dazu im Wesentlichen quer verlaufende, ebenfalls gewellte und parallele Querränder 24 auf. Die ersten Gitterstreben 18 erstrecken sich im Wesentlichen zwischen den beiden Längsrändern 22, 23 und zum Teil, nämlich in den Eckenbereichen, zwischen einem Längsrand und einem Querrand. Die ersten Gitterstreben 18 der Erhebungen 14 liegen an der Oberseite 25 der Gittermatte 12, während die ersten Gitterstreben 18 der Vertiefungen 16 an der Unterseite 26 der Gittermatte 12 liegen.

Wie anhand beispielsweise der Fign. 2 bis 5 zu erkennen ist, sind die ersten Gitterstreben 18 benachbarter Erhebungen und Vertiefungen längs der Flanken 20 durch sich kreuzende zweite und dritte Gitterstreben 27, 28 verbunden, die miteinander erste Kreuzungspunkte 30 bilden. Diese zweiten und dritten Gitterstreben 27, 28 bilden auch mit den ersten Gitterstreben 18 zweite Kreuzungspunkte 32.

Zwischen benachbarten zweiten Kreuzungspunkten 32 der ersten Gitterstreben 18 sowohl der Erhebungen 14 als auch der Vertiefungen 16 weisen die ersten Gitterstreben X-förmige Vorsprünge 34 auf, die aus zwei seitlich abstehenden V-förmigen Vorsprüngen 36 zusammengesetzt sind, die aneinander gegenüberliegend angeordnet sind.

Einige der zweiten Kreuzungspunkte 32 sind mit Lochausbildungen 38 versehen, während andere zweite Kreuzungspunkte 32 Zapfenausbildungen 40 aufweisen. Die Zapfen- und Lochausbildungen sind komplementär ausgebildet und beispielhaft in EP 3 690 378 A1 beschrieben.

Wie insbesondere anhand der Fign. 2 und 3 zu erkennen ist, sind die ersten Gitterstreben 18 zu den beiden Längsrändern 22 hin unterbrochen. Erste Unterbrechungsabschnitte 42 zum bezogen auf den Fign. 2 und 3 oberen, d.h. ersten Längsrand 22 sind von diesem durch einen ersten Abstand L1 beabstandet, während zweite Unterbrechungsabschnitte 44 der ersten Gitterstreben 18 zum bezogen auf den Fign. 2 und 3 unteren, d.h. zweiten Längsrand 23 von diesem um einen zweiten Abstand L2 beabstandet sind, wobei L2 größer ist als L1.

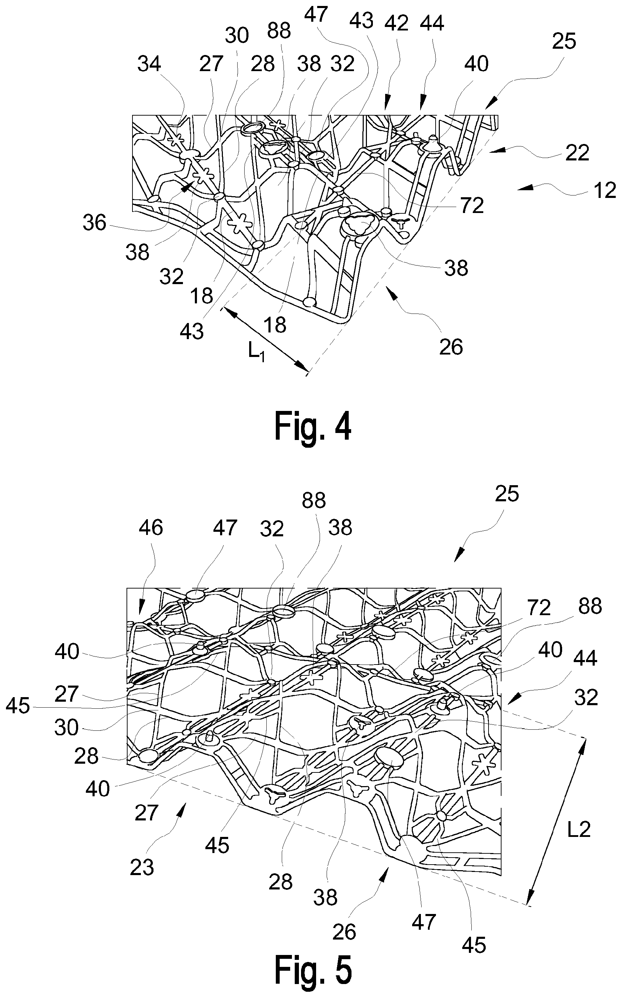

Innerhalb der Unterbrechungsabschnitte 42, 44, die vorzugsweise gleich lang sind, sind die ersten Gitterstreben benachbarter Erhebungen 14 bzw. benachbarter Vertiefungen 16 und/oder benachbarter Erhebungen und Vertiefungen durch Teilnetzwerke 46 verbunden, die aus mehreren sich kreuzenden und miteinander verbundenen unteren Gitterstreben 48, 50, 52, 54, 56, 58, 60, 62 bestehen. Diese einzelnen Teilnetzwerke 46 sind wiederum untereinander verbunden durch zusätzliche Gitterstreben 64, 66, 68, 70 und durch vierte Gitterstreben 72, die parallel zu den Längsrändern 22 verlaufen. In den Fign. 4 und 5 ist gezeigt, dass diese Teilnetzwerke 46 in etwa auf "halber Höhe" zwischen der Oberseite 26 und der Unterseite 28 der Gittermatte verlaufen.

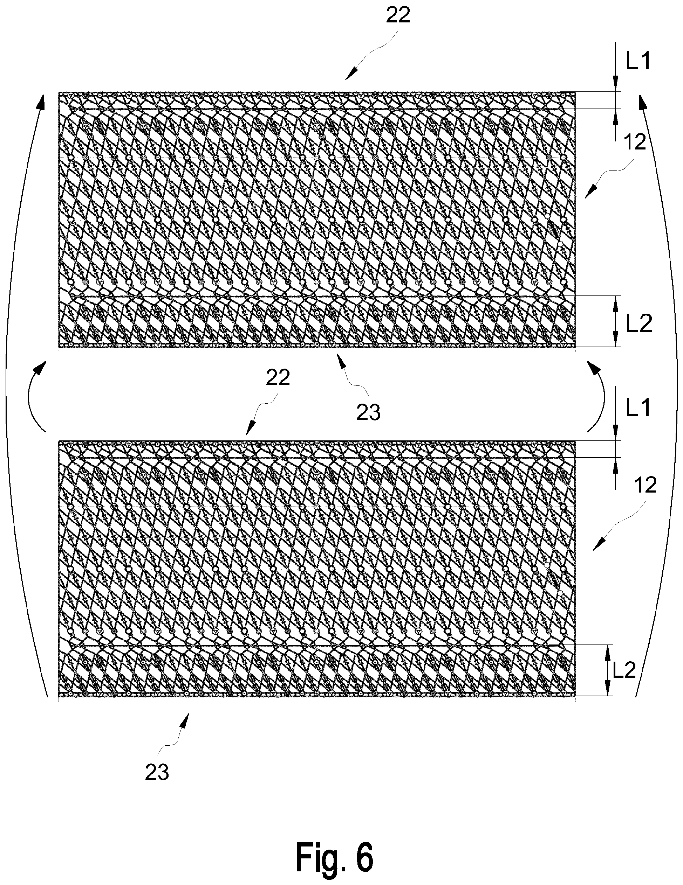

Benachbart zu den ersten Unterbrechungsabschnitten 42, und zwar zur dem (oberen) Längsrand 42 abgewandten Seite, weisen einige der ersten Gitterstreben 18 an Ober- und Unterseite der Gittermatte 12 Verstärkungen durch parallel verlaufende Verstärkungsgitterstreben 43 auf, die sich zwischen den nächstbenachbarten zweiten Kreuzungspunkten 32 erstrecken. In ähnlicher Weise sind nun auch zum (unteren) Längsrand 23 benachbart zu den zweiten Unterbrechungsabschnitten 44 Verstärkungsgitterstreben 45 parallel zu den ersten Gitterstreben 18 angeordnet, und zwar wiederum zwischen benachbarten zweiten Kreuzungspunkten 32 der Ober- und Unterseite der Gittermatte 12. Ferner befinden sich beidseitig der ersten und der zweiten Unterbrechungsabschnitte 44, 46 Anlagepunkte in Form der Lochausbildungen 38, der Zapfenausbildungen 40 und weiterer tellerartiger Auflageflächen 47. Auf all diese Einzelheiten der Gittermattenkonstruktion und deren technischmechanische Stabilisierungsfunktionen sei nachfolgend anhand der Fig. 6 eingegangen.

In Fig. 6 sind zwei Gittermatten 12 mit ihren Oberseiten nach oben weisend nebeneinanderliegend gezeigt. Durch die Pfeile ist angedeutet, dass diese zwei Gittermatten 12 beim Zusammenbau zum Einbaupaket 10 (siehe Fig. 1) mit ihren Oberseiten aufeinanderliegend angeordnet werden. Dadurch kreuzen sich ihre jeweiligen Erhebungen und Vertiefungen, d.h. ihre Strömungshalbkanäle. Zu erkennen ist, dass sich die Verstärkungsgitterstreben 45 über die ersten Unterbrechungsabschnitte 42 erstrecken (, was für beide, d.h. den oberen und den unteren Längsrandbereich gilt), wenn beide Gittermatten 12 mit ihren Oberseiten (durch "Umklappen" der unteren Gittermatte 12 und Auflegen auf die obere Gittermatte 12) aneinanderliegen. Durch die Positionierung der Zapfen- und Lochausbildungen 38, 40 verbinden sich die beiden Gittermatten 12 im Wesentlichen schubfest, was zur Stabilisierung der Gittermatten 12 innerhalb von deren durch die Unterbrechungsabschnitte 42, 44 in gewisser Weise geschwächten Bereichen führt. Hierzu trägt nicht zuletzt auch die Tatsache bei, dass der Abstand L1 der ersten Unterbrechungsabschnitte 42 von dem zu diesen benachbarten Längsrand 22 verschieden (in diesem Ausführungsbeispiel kleiner) ist als der Abstand L2 der zweiten Unterbrechungsabschnitte 46 zu deren zugehörigen Längsrand 23.

Auf die nach Zusammenbau der beiden Gittermatten 12 obenliegende Unterseite der oberen Gittermatte 12 wird nun eine weitere Gittermatte 12 mit ihrer Unterseite aufgelegt, so dass sich wiederum sich kreuzende Strömungshalbkanäle bilden und die Unterbrechungsabschnitte der einen Gittermatte 12 durch durchgehende Bereiche von ersten Gitterstreben 18 der anderen Gittermatte überspannt sind. Auf die Oberseite der aufgelegten Gittermatte 12 wird nun wiederum in der anhand von Fig. 6 beschriebenen Art eine weitere Gittermatte 12 mit deren Oberseite durch "Umklappen" aufgelegt. Dieser Prozess wird wiederholt, bis Einbaupakete der gewünschten Größe (Höhe) zusammengebaut sind.

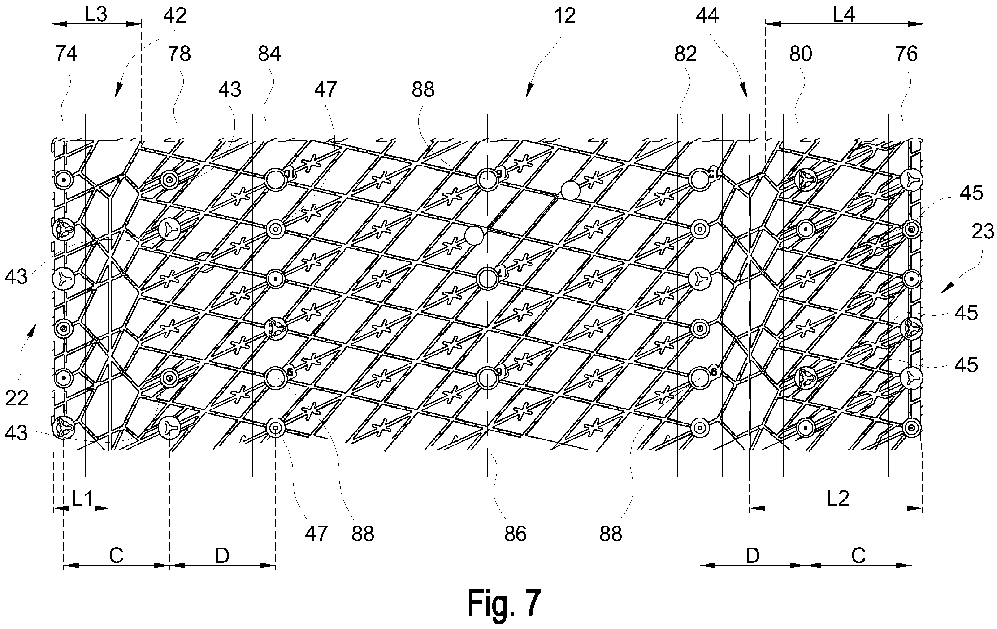

Anhand von Fig. 7 wird nachfolgend näher beschrieben, wo auf der beispielsweise Oberseite 25 oder der Unterseite 26 der Gittermatte 12 die zueinander komplementären Zapfenausbildungen 40 und Lochausbildungen 38 (nachfolgend mit Zapfen und Löcher bezeichnet) angeordnet sind, so dass bei zwei benachbarten Gittermatten 12 eines Einbaupakets 10, die entweder mit ihren Oberseiten 25 oder mit ihren Unterseiten 26 aneinanderliegen, die jeweiligen ersten und zweiten Unterbrechungsabschnitte 42, 44 durch durchgehende Abschnitte der ersten Gitterstreben 18 überbrückt und die Gittermatten 12 beidseitig der ersten und zweiten Unterbrechungsabschnitte 42, 44 durch ineinandergreifende Zapfen und Löcher mechanisch verbunden/verhakt sind.

Hierzu weist die Gittermatte 12 an ihrem ersten Längsrand 22 eine Reihe 74 mit abwechselnd aufeinanderfolgenden Löchern und Zapfen auf. Eine solche Reihe 76 mit Zapfen und Löchern ist auch längs des zweiten Längsrandes 23 vorhanden. Benachbart zur Reihe 74 befinden sich die ersten Unterbrechungsabschnitte 42, auf deren dem ersten Längsrand 22 abgewandten Seiten wiederum eine Reihe 78 mit Zapfen und Löchern verläuft. Der Abstand der Reihen 74 und 78 ist in Fig. 7 mit C gekennzeichnet. In diesem Abstand C zur Reihe 76 am zweiten Längsrand 23 ist parallel zu diesem eine weitere Reihe 80 mit Zapfen und Löchern angeordnet.

Wird nun auf die in Fig. 7 nur zum Teil gezeigte Gittermatte 12 eine weitere Gittermatte 12 mit ihrer Oberseite aufgelegt (wie anhand von Fig. 6 gezeigt), so greifen die Zapfen der Reihe 74 in Löcher der Reihe 76 und Löcher der Reihe 74 nehmen Zapfen der Reihe 76 auf. Entsprechend greifen Zapfen der Reihe 80 in Löcher der Reihe 78 und Löcher der Reihe 80 nehmen Zapfen der Reihe 78 auf.

Zwischen den beiden Reihen 76 und 80 befinden sich durchgehend verlaufende Abschnitte erster Gitterstreben 18, die zudem noch verstärkt sein können (siehe die Verstärkungsgitterstreben 45). In diesen Abschnitten der ersten Gitterstreben 18 zwischen den beiden Reihen 76 und 80 überspannen sie die ersten Unterbrechungsabschnitte 42. Durch die Verhakung (Zapfen-Loch-Verbindungen) sind die Gittermatten 12 schubsteif verbunden.

Die zweiten Unterbrechungsabschnitte 44 sind beidseitig mit Reihen mit Zapfen und Löchern versehen, und zwar als Reihe 80 (oben bereits erwähnt) und als Reihe 82. Der Abstand dieser beiden Reihen ist in Fig. 7 mit D gekennzeichnet und kann gleich dem Abstand C sein. Parallel zur Reihe 78 und im Abstand D zu dieser verläuft eine weitere Reihe 84 mit Zapfen und Löchern. Zwischen diesen beiden Reihen 78 und 80 erstrecken sich die Gitterstreben 18 durchgehend. Sie überspannen in diesen Bereichen die zweiten Unterbrechungsabschnitte 44, wenn zwei Gittermatten 12 mit ihren Unter- oder Oberseiten aneinanderliegen. Auch hier erfolgt durch die beidseitig der Unterbrechungsabschnitte 44 erfolgenden Verhakung (Zapfen-Loch-Verbindung) beider Gittermatten 12 ein schubsteifer Verbund.

Der Abstand L4 der dem zweiten Längsrand 23 zugewandten Enden der zweiten Unterbrechungsabschnitte 44 ist, wie in Fig. 7 gezeigt, größer als der Abstand L3 der dem ersten Längsrand 22 abgewandten Enden der ersten Unterbrechungsabschnitte 42 von dem ersten Längsrand 22.

Durch die beschriebene Konstruktion werden die Gittermatten 12 im Einbaupaket 10 stabilisiert. Ihre jeweiligen Unterbrechungsabschnitte 42, 44 liegen, bezogen auf jeweils ein Paar aneinanderliegender Gittermatten 12 versetzt zueinander.

Die Paare von Reihen 74 und 76, von Reihen 78 und 80 sowie von Reihen 82 und 84 sind jeweils symmetrisch zur Mittellängsachse 86 der Gittermatte 12 angeordnet.

Auch sind mehrere Ringe 88 mit von diesen jeweils umschlossenen Löchern symmetrisch zur Mittellängsachse 86 positioniert. Diese Ringe 88 einer Gittermatte 12 fluchten mit den Ringen 88 der jeweils benachbarten Gittermatten 12, bilden also mit ihren miteinander fluchtenden Löchern im Einbaupaket 10 Kanäle aus, durch die im Bedarfsfalle Zugstreben (nicht gezeigt) eingebracht werden können, um dem Einbaupaket 10 weitere Stabilität zu verleihen.

### BEZUGSZEICHENLISTE

- 10: Einbauelement bzw. -paket
- 12: Gittermatte
- 14: Erhebungen
- 16: Vertiefungen
- 18: erste Gitterstreben
- 20: Flanken
- 22: erster Längsrand einer Gittermatte
- 23: zweiter Längsrand einer Gittermatte
- 24: Querränder einer Gittermatte
- 25: Oberseite einer Gittermatte
- 26: Unterseite einer Gittermatte
- 27: zweite Gitterstreben
- 28: dritte Gitterstreben
- 30: erste Kreuzungspunkte
- 32: zweite Kreuzungspunkte
- 34: X-förmige Vorsprünge
- 36: V-förmige Vorsprünge
- 38: Lochausbildungen
- 40: Zapfenausbildungen
- 42: erste Unterbrechungsabschnitte
- 43: Verstärkungsgitterstrebe
- 44: zweite Unterbrechungsabschnitte
- 45: Verstärkungsgitterstrebe
- 46: Teilnetzwerke
- 47: Auflagefläche
- 48: Gitterstreben
- 50: Gitterstreben
- 52: Gitterstreben
- 54: Gitterstreben
- 56: Gitterstreben
- 58: Gitterstreben
- 60: Gitterstreben
- 62: Gitterstreben
- 64: zusätzliche Gitterstreben
- 66: zusätzliche Gitterstreben
- 68: zusätzliche Gitterstreben
- 70: zusätzliche Gitterstreben
- 72: vierte Gitterstreben
- 74: Reihe mit Zapfen und Löchern
- 76: Reihe mit Zapfen und Löchern
- 78: Reihe mit Zapfen und Löchern
- 80: Reihe mit Zapfen und Löchern
- 82: Reihe mit Zapfen und Löchern
- 84: Reihe mit Zapfen und Löchern
- 86: Längsmittelachse der Gittermatte
- 88: Ringe mit Löchern
- L1: erster Abstand
- L2: zweiter Abstand
- L3: Abstand
- L4: Abstand
- A: Strömungspfeil für das Nutzfluid
- B: Strömungspfeil für das Arbeitsfluid

## Patentansprüche

1. Gewellte Gittermatte eines einen Stapel aus mehreren derartigen Gittermatten aufweisenden Einbauelements einer Vorrichtung zur Behandlung eines Nutzfluids mittels eines Arbeitsfluids, insbesondere zur Befeuchtung und/oder Reinigung und/oder Kühlung eines Nutzfluids, insbesondere eines Gases, mittels eines Arbeitsfluids, insbesondere versprühten Wassers, mit
- einer Oberseite (25) und einer Unterseite (26),
- einem ersten Längsrand (22) und einem zweiten Längsrand (23), die im Wesentlichen zueinander parallel verlaufen und durch zwei zu diesen Längsrändern (22, 23) querverlaufende, ebenfalls im Wesentlichen zueinander parallele Querränder (24) verbunden sind,
- in einem Winkel von ungleich 90° zu sowohl den Längsrändern (22, 23) als auch den Querrändern (24) geradlinig verlaufenden, wechselweise nebeneinanderliegenden Vertiefungen (16) und Erhebungen (14) mit diese verbindenden Flanken (20),
- wobei die Erhebungen (14) an der Oberseite (25) und die Vertiefungen (16) an der Unterseite (26) angeordnet sind,
- wobei längs der Erhebungen (14) an der Oberseite (25) und längs der Vertiefungen (16) an der Unterseite (26) jeweils eine geradlinige erste Gitterstrebe (18) verläuft und
- wobei die ersten Gitterstreben (18) jeweils einer Erhebung (14) und der zu dieser benachbarten Vertiefung (16) durch sich kreuzende zweite und dritte Gitterstreben (27, 28) verbunden sind, die an den Flanken (20) verlaufen und miteinander erste Kreuzungspunkte (30) sowie mit den ersten Gitterstreben (18) an der Oberseite (25) und an der Unterseite (26) jeweils zweite Kreuzungspunkte (32) bilden, **dadurch gekennzeichnet,**
- **dass** jede bis zu dem ersten Längsrand (22) verlaufende erste Gitterstrebe (18) einen ersten Unterbrechungsabschnitt (42) aufweist, dessen Mittenpunkt zu dem ersten Längsrand (22) einen ersten Abstand (L1) aufweist,
- **dass** jede bis zu dem zweiten Längsrand (23) verlaufende erste Gitterstrebe (18) einen zweiten Unterbrechungsabschnitt (44) aufweist, dessen Mittenpunkt zu dem zweiten Längsrand (23) einen zweiten Abstand (L2) aufweist,
- wobei der erste Abstand (L1) kleiner ist als der zweite Abstand (L2),
- **dass** die ersten Gitterstreben (18) jeweils zweier benachbarter Erhebungen (14) und/oder jeweils zweier benachbarter Vertiefungen (16) beidseitig ihrer ersten und zweiten Unterbrechungsabschnitte (42, 44) jeweils durch miteinander Teilnetzwerke (46) bildende, weitere Gitterstreben (48 bis 62) verbunden sind,
- wobei die längs jeweils einem der Längsränder (22, 23) nebeneinander angeordneten Teilnetzwerke (46) untereinander durch eine parallel zu dem jeweiligen Längsrand (22, 23) verlaufende vierte Gitterstreben (72) miteinander verbunden sind, die sich durch den ersten bzw. zweiten Unterbrechungsabschnitt (42, 44) erstreckt.

2. Gewellte Gittermatte nach Anspruch 1, **dadurch gekennzeichnet, dass** sich die vierten Gitterstreben (72) durch den ersten und/oder zweiten Unterbrechungsabschnitt (42, 44) an dessen jeweiligem Mittelpunkt erstrecken.

3. Gewellte Gittermatte nach Anspruch 1 oder 2, **dadurch gekennzeichnet, dass** die ersten und zweiten Unterbrechungsabschnitte (42, 44) gleich breit sind.

4. Gewellte Gittermatte nach einem der Ansprüche 1 bis 3, **dadurch gekennzeichnet, dass** die Teilnetzwerke (46) jeweils innerhalb eines in einer Höhe zwischen der Oberseite (25) und der Unterseite (26) befindlichen Mittenabschnitt liegen und dass die vierten Gitterstreben (72) ebenfalls in dieser Höhe verlaufen.

5. Gewellte Gittermatte nach einem der Ansprüche 1 bis 4, **dadurch gekennzeichnet, dass** die ersten Gitterstreben (18) zwischen den zweiten Kreuzungspunkten (32) mit den zweiten und dritten Gitterstreben (27, 28) jeweils seitlich abstehende, in Höhe jeweils der Oberseite (25) und der Unterseite (26) verlaufende stabförmige Vorsprünge (34, 36) aufweisen.

6. Gewellte Gittermatte nach Anspruch 5, **dadurch gekennzeichnet, dass** zu beiden Seiten einer ersten Gitterstrebe (18) mehrere Paare mit jeweils zwei miteinander V-förmig verlaufenden stabförmigen Vorsprüngen (36) angeordnet sind, wobei diese vier stabförmigen Vorsprünge (36) ihrerseits X-förmige Vorsprünge (34) bilden.

7. Gewellte Gittermatte nach einem der Ansprüche 1 bis 6, **gekennzeichnet durch** über die Oberseite (25) und die Unterseite (26) verteilte, zueinander komplementäre Zapfenausbildungen (40) und Lochausbildungen (38) zur Verbindung von nebeneinander angeordneten Gittermatten des Gittermattenstapels eines Einbauelements bei sich kreuzenden Erhebungen (14) und Vertiefungen (16) benachbarter Gittermatten (12) des Gittermattenstapels, indem benachbarte Gittermatten (12) des Gittermattenstapels wechselweise mit ihren Oberseiten (25) und mit ihren Unterseiten (26) aneinanderliegend angeordnet sind, wobei die ersten und die zweiten Unterbrechungsabschnitte (42, 44) einer Gittermatte (12) bezogen auf ihre Längsränder (22, 23) seitlich versetzt zu den zweiten und ersten Unterbrechungsabschnitten (44, 42) der jeweils benachbarten Gittermatte (12) angeordnet sind.

8. Gewellte Gittermatte nach Anspruch 7, **dadurch gekennzeichnet, dass** der Abstand (L4) des dem zweiten Längsrand (23) zugewandten Endes des zweiten Unterbrechungsabschnitts (44) von dem zweiten Längsrand (23) größer ist als der Abstand (L3) des dem ersten Längsrand (22) abgewandten Endes des ersten Unterbrechungsabschnitts (42) vom ersten Längsrand (22).

9. Gewellte Gittermatte nach Anspruch 7 oder 8, **dadurch gekennzeichnet, dass** zwischen den zweiten Unterbrechungsabschnitten (44) und dem zweiten Längsrand (23) in Richtung orthogonal zum zweiten Längsrand (23) zueinander beabstandete Zapfen- und/oder Lochausbildungen (40, 38) vorgesehen sind, die hinsichtlich ihres jeweiligen Abstandes mit Zapfen- und/oder Lochausbildungen (40, 38) korrespondieren, die beidseitig des ersten Unterbrechungsabschnitts (42) angeordnet sind.

10. Gewellte Gittermatte nach einem der Ansprüche 1 bis 9, **dadurch gekennzeichnet, dass** mindestens zwei der Gitterstreben (48 bis 62) jedes Teilnetzwerks (46) sich kreuzen und dass die vierte Gitterstrebe (72) durch diesen Kreuzungspunkt verläuft.

11. Gewellte Gittermatte nach Anspruch 10, **dadurch gekennzeichnet, dass** die vierten Gitterstreben (72) einige der Gitterstreben (48 bis 62) jedes Teilnetzwerks (46) kreuzen.

12. Gewellte Gittermatter nach Anspruch 10 oder 11, **dadurch gekennzeichnet, dass** benachbarte Teilnetzwerke (46) durch einige ihrer Gitterstreben (48 bis 62) mit den benachbarten ersten Gitterstreben (18) und insbesondere mit den ersten Gitterstreben (18) benachbarter Erhebungen (14) oder benachbarter Vertiefungen (16) verbunden sind.

13. Einbauelement einer Vorrichtung zur Behandlung eines Nutzfluids mittels eines Arbeitsfluids, insbesondere zur Befeuchtung und/oder Reinigung und/oder Kühlung eines Nutzfluids, insbesondere eines Gases, mittels eines Arbeitsfluids, insbesondere versprühten Wassers, mit
- einem Stapel aus aneinanderliegenden gewellten Gittermatten (12) nach einem der vorhergehenden Ansprüche,
- wobei benachbarte Gittermatten (12) bei sich kreuzenden Erhebungen (14) und Vertiefungen (16) aneinanderliegen, indem jeweils benachbarte Gittermatten (12) wechselweise mit ihren Oberseiten (25) und ihren Unterseiten (26) aneinanderliegend angeordnet sind, und die ersten und zweiten Unterbrechungsabschnitte (42, 44) einer Gittermatte (12) seitlich versetzt zu den zweiten und ersten Unterbrechungsabschnitten (44, 42) der jeweils benachbarten Gittermatte (12) angeordnet sind.

## Claims

1. A corrugated grid mat of an installation element comprising a stack of a plurality of such grid mats, of a device for treating a useful fluid by means of a working fluid, in particular for humidifying and/or cleaning and/or cooling a useful fluid, in particular a gas, by means of a working fluid, in particular sprayed water, comprising
- an upper side (25) and a lower side (26),
- a first longitudinal edge (22) and a second longitudinal edge (23) which run essentially parallel to each other and are connected by two transverse edges (24) which run transversely to these longitudinal edges (22, 23) and are also essentially parallel to each other,
- alternately adjacent depressions (16) and elevations (14) running linearly at an angle not equal to 90° to both the longitudinal edges (22, 23) and the transverse edges (24) with flanks (20) connecting them,
- wherein the elevations (14) are arranged on the upper side (25) and the depressions (16) on the lower side (26),
- wherein a rectilinear first grid strut (18) extends along the elevations (14) on the upper side (25) and along the depressions (16) on the lower side (26), and
- wherein the first grid struts (18) of a respective elevation (14) and the depression (16) adjacent thereto are connected by intersecting second and third grid struts (27, 28) which extend along the flanks (20) and form first intersection points (30) with one another and second intersection points (32) with the first grid struts (18) on the upper side (25) and on the lower side (26) respectively,
**characterized in that**
- each first grid strut (18) extending up to the first longitudinal edge (22) has a first interruption section (42), the center point of which has a first distance (L1) from the first longitudinal edge (22),
- each first grid strut (18) extending up to the second longitudinal edge (23) has a second interruption section (44), the center point of which has a second distance (L2) from the second longitudinal edge (23),
- the first distance (L1) being smaller than the second distance (L2),
- the first grid struts (18) of in each case two adjacent elevations (14) and/or in each case two adjacent depressions (16) are connected on both sides of their first and second interruption sections (42, 44) in each case by further grid struts (48 to 62) forming sub-networks (46) with one another,
- the sub-networks (46) arranged next to one another along one of the longitudinal edges (22, 23) in each case being connected to one another by a fourth grid strut (72) extending parallel to the respective longitudinal edge (22, 23), which extends through the first or second interruption section (42, 44).

2. The corrugated grid mat according to claim 1, **characterized in that** the fourth grid struts (72) extend through the first and/or second interruption section (42, 44) at the respective midpoint thereof.

3. The corrugated grid mat according to claim 1 or 2, **characterized in that** the first and second interruption sections (42, 44) are of equal width.

4. The corrugated grid mat according to one of claims 1 to 3, **characterized in that** the sub-networks (46) each lie within a central section located at a height between the upper side (25) and the lower side (26) and **in that** the fourth grid struts (72) also extend at this height.

5. The corrugated grid mat according to one of claims 1 to 4, **characterized in that** the first grid struts (18) between the second intersection points (32) with the second and third grid struts (27, 28) each have laterally projecting rod-shaped projections (34, 36) extending at the level of the upper side (25) and the lower side (26) respectively.

6. The corrugated grid mat according to claim 5, **characterized in that** on both sides of a first grid strut (18) a plurality of pairs is arranged each having two rod-shaped projections (36) running together in a V-shape, these four rod-shaped projections (36) in turn forming X-shaped projections (34).

7. The corrugated grid mat according to one of claims 1 to 6, **characterized by** mutually complementary pin formations (40) and hole formations (38) distributed over the upper side (25) and the lower side (26) for connecting adjacent grid mats of the grid mat stack of an installation element in the case of intersecting elevations (14) and depressions (16) of adjacent grid mats (12) of the grid mat stack, in that adjacent grid mats (12) of the grid mat stack are arranged alternately with their upper sides (25) and with their lower sides (26) adjacent to one another, the first and the second interruption sections (42, 44) of a grid mat (12) being arranged laterally offset with respect to their longitudinal edges (22, 23) relative to the second and first interruption sections (44, 42) of the respectively adjacent grid mat (12).

8. The corrugated grid mat according to claim 7, **characterized in that** the distance (L4) of the end of the second interruption section (44) facing the second longitudinal edge (23) from the second longitudinal edge (23) is greater than the distance (L3) of the end of the first interruption section (42) facing away from the first longitudinal edge (22) from the first longitudinal edge (22).

9. The corrugated grid mat according to claim 7 or 8, **characterized in that** pin and/or hole formations (40, 38) are provided between the second interruption sections (44) and the second longitudinal edge (23), spaced apart from one another in the direction orthogonal to the second longitudinal edge (23), which pin and/or hole formations correspond with respect to their respective spacing with pin and/or hole formations (40, 38) which are arranged on both sides of the first interruption section (42).

10. The corrugated grid mat according to one of claims 1 to 9, **characterized in that** at least two of the grid struts (48 to 62) of each sub-network (46) cross each other and that the fourth grid strut (72) runs through this crossing point.

11. The corrugated grid mat according to claim 10, **characterized in that** the fourth grid struts (72) cross some of the grid struts (48 to 62) of each sub-network (46).

12. The corrugated grid mat according to claim 10 or **11, characterized in that** adjacent sub-networks (46) are connected by some of their grid struts (48 to 62) to the adjacent first grid struts (18) and in particular to the first grid struts (18) of adjacent elevations (14) or adjacent depressions (16).

13. An installation element of a device for treating a useful fluid by means of a working fluid, in particular for humidifying and/or cleaning and/or cooling a useful fluid, in particular a gas, by means of a working fluid, in particular sprayed water, comprising
- a stack of adjacent corrugated grid mats (12) according to one of the preceding claims,
- wherein adjacent grid mats (12) lie against one another at intersecting elevations (14) and depressions (16), in that in each case adjacent grid mats (12) are arranged alternately with their upper sides (25) and their lower sides (26) lying against one another, and the first and second interruption sections (42, 44) of a grid mat (12) are arranged laterally offset with respect to the second and first interruption sections (44, 42) of the respectively adjacent grid mat (12).

## Revendications

1. Nappe en treillis ondulée d'un élément de remplissage présentant un empilement de plusieurs nappes en treillis de ce type d'un dispositif pour le traitement d'un fluide de procédé au moyen d'un fluide de travail, en particulier pour l'humidification et/ou le nettoyage et/ou le refroidissement d'un fluide de procédé, en particulier d'un gaz, au moyen d'un fluide de travail, en particulier de l'eau pulvérisée, avec
- un côté supérieur (25) et un côté inférieur (26);
- un premier bord longitudinal (22) et un deuxième bord longitudinal (23), qui s'étendent sensiblement parallèlement entre eux et sont reliés par deux bords transversaux (24), eux aussi sensiblement parallèles entre eux, s'étendant transversalement à ces bords longitudinaux (22, 23),
- des dépressions (16) et des élévations (14) s'étendant linéairement selon un angle différent de 90° par rapport aux bords longitudinaux (22, 23) et aux bords transversaux (24), situées tour à tour côte à côte avec des flancs (20) qui les relient,
- où les élévations (14) sont disposées au niveau du côté supérieur (25) et les dépressions (16) au niveau du côté inférieur (26),
- où une première barre de treillis (18) rectiligne s'étend le long des élévations (14) au niveau du côté supérieur (25) et le long des dépressions (16) au niveau du côté inférieur (26) et
- où les premières barres de treillis (18) d'une élévation (14) et de la dépression (16) voisine de celle-ci sont reliées par des deuxièmes et troisièmes barres de treillis (27, 28) qui se croisent, qui s'étendent au niveau des flancs (20) et forment entre elles des premiers points de croisement (30) et des deuxièmes points de croisement (32) avec les premières barres de treillis (18) au niveau du côté supérieur (25) et au niveau du côté inférieur (26),
**caractérisée**
- **en ce que** chaque première barre de treillis s'étendant jusqu'au premier bord longitudinal (22) présente une première section d'interruption (42) dont le milieu présente une première distance (L1) par rapport au premier bord longitudinal (22),
- **en ce que** chaque première barre de treillis (18) s'étendant jusqu'au deuxième bord longitudinal (23) présente une deuxième section d'interruption (44) dont le milieu présente une deuxième distance (L2) par rapport au deuxième bord longitudinal (23),
- où la première distance (L1) est inférieure à la deuxième distance (L2),
- **en ce que** les premières barres de treillis (18) de deux élévations (14) voisines et/ou de deux dépressions (16) voisines sont reliées de part et d'autre de leurs premières et deuxièmes sections d'interruption (42, 44) par d'autres barres de treillis (48 à 62) formant entre elles des sous-réseaux (46),
- où les sous-réseaux (46) disposés côte à côte le long de l'un des bords longitudinaux (22, 23) sont reliés entre eux par une quatrième barre de treillis (72) s'étendant parallèlement au bord longitudinal (22, 23) respectif, qui s'étend à travers la première ou la deuxième section d'interruption (42, 44).

2. Nappe en treillis ondulée selon la revendication 1, **caractérisée en ce que** les quatrièmes barres de treillis (72) s'étendent à travers la première et/ou la deuxième section d'interruption (42, 44) au niveau de son milieu respectif.

3. Nappe en treillis ondulée selon la revendication 1 ou 2, **caractérisée en ce que** les premières et deuxièmes sections d'interruption (42, 44) sont de largeur égale.

4. Nappe en treillis ondulée selon l'une des revendications 1 à 3, **caractérisée en ce que** les sous-réseaux (46) sont situés chacun dans une section centrale située à une hauteur entre le côté supérieur (25) et le côté inférieur (26), et **en ce que** les quatrièmes barres de treillis (72) s'étendent également à cette hauteur.

5. Nappe en treillis ondulée selon l'une des revendications 1 à 4, **caractérisée en ce que** les premières barres de treillis (18) présentent entre les deuxièmes points de croisement (32) avec les deuxièmes et troisièmes barres de treillis (27, 28) à chaque fois des saillies en forme de tige (34, 36) en retrait latéralement, s'étendant respectivement au niveau du côté supérieur (25) et du côté inférieur (26).

6. Nappe en treillis ondulée selon la revendication 5, **caractérisée en ce que** plusieurs paires avec à chaque fois deux saillies en forme de tige (36) s'étendant ensemble en forme de V, sont disposées de part et d'autre d'une première barre de treillis (18), où ces quatre saillies en forme de tige (36) forment elles-mêmes des saillies en forme de X (34).

7. Nappe en treillis ondulée selon l'une des revendications 1 à 6, **caractérisée par** des formations de tenons (40) et des formations de trous (38) complémentaires entre elles, réparties sur le côté supérieur (25) et le côté inférieur (26), pour la liaison de nappes en treillis disposées côte à côte de l'empilement de nappes en treillis d'un élément de remplissage dans le cas d'élévations (14) et de dépressions (16) qui se croisent de nappes en treillis (12) voisines de l'empilement de nappes en treillis, en ce que des nappes en treillis (12) voisines de l'empilement de nappes en treillis sont disposées alternativement côte à côte avec leurs côtés supérieurs (25) et avec leurs côtés inférieurs (26), où les premières et les deuxièmes sections d'interruption (42, 44) d'une nappe en treillis (12) sont décalées latéralement par rapport à leurs bords longitudinaux (22, 23) par rapport aux deuxièmes et premières sections d'interruption (44, 42) de la nappe en treillis (12) voisine correspondante.

8. Nappe en treillis ondulée selon la revendication 7, **caractérisée en ce que** la distance (L4) entre l'extrémité de la deuxième section d'interruption (44) tournée vers le deuxième bord longitudinal (23) et le deuxième bord longitudinal (23) est supérieure à la distance (L3) entre l'extrémité de la première section d'interruption (42) opposée au premier bord longitudinal (22) et le premier bord longitudinal (22).

9. Nappe en treillis ondulée selon la revendication 7 ou 8, **caractérisée en ce que** des formations de tenons et/ou de trous (40, 38) espacées les une des autres sont prévues entre les deuxièmes sections d'interruption (44) et le deuxième bord longitudinal (23) dans une direction orthogonale au deuxième bord longitudinal (23), qui correspondent concernant leur distance respective à des formations de tenons et/ou de trous (40, 38) qui sont disposées de part et d'autre de la première section d'interruption (42).

10. Nappe en treillis ondulée selon l'une des revendications 1 à 9, **caractérisée en ce qu'**au moins deux des barres de treillis (48 à 62) de chaque sous-réseau (46) se croisent et **en ce que** la quatrième barre de treillis (72) s'étend à travers ce point de croisement.

11. Nappe en treillis ondulée selon la revendication 10, **caractérisée en ce que** les quatrièmes barres de treillis (72) croisent quelques-unes des barres de treillis (48 à 62) de chaque sous-réseau (46).

12. Nappe en treillis ondulée selon la revendication 10 ou 11, **caractérisée en ce que** des sous-réseaux (46) voisins sont reliés par quelques-unes de leurs barres de treillis (48 à 62) aux premières barres de treillis (18) voisines, et en particulier aux premières barres de treillis (18) d'élévations (14) voisines ou de dépressions (16) voisines.

13. Élément de remplissage d'un dispositif pour le traitement d'un fluide de procédé au moyen d'un fluide de travail, en particulier pour l'humidification et/ou le nettoyage et/ou le refroidissement d'un fluide de procédé, en particulier d'un gaz, au moyen d'un fluide de travail, en particulier de l'eau pulvérisée, avec
- un empilement de nappes en treillis ondulées (12) situées côte à côté selon l'une des revendications précédentes,
- où des nappes en treillis (12) voisines sont disposées côte à côte dans le cas d'élévations (14) et de dépressions (16) qui se croisent, en ce que des nappes en treillis (12) voisines sont disposées côte à côte tour à tour avec leurs côtés supérieurs (25) et leurs côtés inférieurs (26), et les premières et deuxièmes sections d'interruption (42, 44) d'une nappe en treillis (12) sont décalées latéralement par rapport aux deuxièmes et premières sections d'interruption (44, 42) de la nappe en treillis (12) voisine respective.
